# EUROPÄISCHE PATENTSCHRIFT

(11) **EP 3 621 858 B1**
(45) Veröffentlichungstag und Bekanntmachung des Hinweises auf die Patenterteilung: **30.12.2020**
(21) Anmeldenummer: 18722936.4
(22) Anmeldetag: 26.04.2018
(51) Int. Cl.: B60T 7/04, B60T 11/18

(54) **BETÄTIGUNGSVORRICHTUNG FÜR EINE FAHRZEUGBREMSANLAGE**
ACTUATION DEVICE FOR VEHICLE BRAKE SYSTEM
SYSTÈME D'ACTIVATION DE FREIN E VÉHICULE

(30) Priorität: 12.05.2017 DE 102017004584
(43) Veröffentlichungstag der Anmeldung: 18.03.2020
(73) Patentinhaber: ZF Active Safety GmbH, 56070 Koblenz (DE)
(72) Erfinder: RUEDELL, Axel, 56182 Urbar (DE)
(86) Internationale Anmeldenummer: PCT/EP2018/060720
(87) Internationale Veröffentlichungsnummer: WO 2018/206299

(56) Entgegenhaltungen:
- EP-A1- 2 000 376
- DE-A1-102006 056 674
- FR-A1- 2 735 086
- GB-A- 2 142 396
- KR-A- 20010 105 693

## Beschreibung

### Technisches Gebiet

Die vorliegende Offenbarung betrifft allgemein das technische Gebiet von Betätigungsvorrichtungen für Fahrzeugbremsanlagen. Derartige Betätigungsvorrichtungen können zum Ansteuern einer elektrohydraulischen Fahrzeugbremsanlage und auch zum Betätigen einer rein hydraulischen Fahrzeugbremsanlage eingesetzt werden. Die vorliegende Offenbarung betrifft ferner ein Bremskraftverstärker-System und eine Fahrzeugbremsanlage mit einer derartigen Betätigungseinrichtung.

### Stand der Technik

Gattungsgemäße Betätigungsvorrichtungen für Fahrzeugbremsanlagen weisen ein mit einem Bremspedal koppelbares Krafteingangsglied und einen Druckkolben oder einem anderen Kraftübertragungsglied auf. Das Kraftübertragungsglied überträgt die von dem Bremspedal auf das Krafteingangsglied ausgeübte Betätigungskraft auf einen Hauptbremszylinder. Das Bremspedal verfolgt aufgrund seiner Anbringung am Fahrzeug bei der Betätigung eine Schwenkbewegung. Um dieser Schwenkbewegung folgen zu können, ist das Krafteingangsglied gelenkig mit dem Kraftübertragungsglied verbunden. Derartige Betätigungsvorrichtungen sind aus dem Stand der Technik bekannt.

In dem Dokument DE 10 2004 038 371 A1 ist ein Bremskrafterzeuger offenbart. Der Bremskrafterzeuger weist ein Krafteingangsglied auf, das mit einem Bremspedal koppelbar ist. Das Krafteingangsglied weist ein sphärisch geformtes Ende auf, mit dem es in einem Übertragungselement aufgenommen ist. Das Krafteingangsglied kann zusammen mit dem Übertragungselement verlagert werden. Das Krafteingangsglied ist über eine Gelenkanordnung gelenkig mit einem Führungskolben gekoppelt. Die Führungskolben weist in einem pedalnahen Bereich eine sphärische Krümmung mit einem Durchbruch auf. In diesem Bereich sind konvex bzw. konkav gewölbte Gelenkscheiben angeordnet. Durch diese Anordnung ergibt sich eine Schwenkführung des Krafteingangsglieds relativ zu dem Führungskolben um einen Schwenkpunkt, so dass je nach Winkelstellung des Bremspedals das Krafteingangsglied in eine der Winkelstellung des Bremspedals entsprechende Stellung verschwenkt werden kann.

Ein verschwenkbares Krafteingangsglied kann die Montage der Betätigungsvorrichtung im Fahrzeug und insbesondere die Kopplung des Krafteingangsglieds mit dem Bremspedal bei bereits im Fahrzeug montierter Betätigungsvorrichtung erschweren.

Die DE102006056674A1 offenbart einen pneumatischen Bremskraftverstaerker mit einem betätigbaren Eingangsglied und Mittel, die die Einstellung einer Eingangskraft ermöglichen.

### Kurzer Abriss

Es ist eine einfach zu montierende Betätigungsvorrichtung für eine Fahrzeugbremsanlage anzugeben.

Die hier angegebene Betätigungsvorrichtung für eine Fahrzeugbremsanlage umfasst ein Krafteingangsglied, das mit einem Bremspedal koppelbar ist, und einen Hauptbremszylinder. Der Hauptbremszylinder weist wenigstens ein Kraftübertragungsglied auf. Das Kraftübertragungsglied ist mit dem Krafteingangsglied gelenkig gekoppelt. Das Kraftübertragungsglied ist zur Übertragung einer auf das Krafteingangsglied ausgeübten Kraft auf den Hauptbremszylinder angeordnet. Die Betätigungsvorrichtung umfasst wenigstens ein elastisch deformierbares Positionierelement. Das wenigstens eine Positionierelement stellt eine Haltekraft bereit, mit der das wenigstens eine Positionierelement das wenigstens eine Krafteingangsglied in einer Montagestellung bezüglich des Hauptbremszylinders hält.

Die Montagestellung des Krafteingangsglieds kann einer Stellung des Krafteingangsglieds relativ zu dem Hautbrennszylinder entsprechen, in der eine Längsachse des Krafteingangslieds einen vordefinierten Verlauf relativ zu einer Längsachse des Hauptbremszylinders einnimmt. Die Längsachse des Krafteingangsglieds kann sich schräg oder parallel zur Längsachse des Hauptbremszylinders erstrecken. Die Längsachse des Krafteingangslieds kann gemäß einer Implementierung in der Montagestellung des Krafteingangsglieds im Wesentlichen mit der Längsachse des Hauptbremszylinders zusammenfallen.

Das wenigstens eine Positionierelement kann nach Überschreiten der Haltekraft eine Auslenkung des Krafteingangsglieds zulassen. Die Auslenkung des Krafteingangsglieds aus der Montagestellung kann unter elastischer Deformation des Positionierelements stattfinden. Die Auslenkung kann aus der Montagestellung in verschiedenen Richtungen relativ zu dem Hauptbremszylinder ausgelenkt werden. Der Betrag der Auslenkbarkeit kann beispielsweise ca. 2 bis 5 oder 8°, insbesondere ca. 3°, betragen. Die Haltekraft kann einen Wert von ungefähr 2 bis 10 N, vorzugsweise 3 bis 7 N und insbesondere 5 N, aufweisen Die von dem wenigstens einen Positionierelement bereitgestellte Haltekraft kann von der Gewichtskaft des Krafteingangsglieds abhängen, die an der Position des Positionierelements an der Betätigungsvorrichtung von dem Krafteingangsglied auf das Positionierelement ausgeübt werden kann.

Das wenigstens eine Positionierelement kann sich zwischen dem Krafteingangsglied und dem Kraftübertragungsglied erstrecken. Das wenigstens eine Positionierelement kann sich in radialer und/oder axialer Richtung bezüglich des Krafteingangsgliedes erstrecken. Das wenigstens eine Positionierelement kann sich in axialer Richtung und/oder bezüglich einer Schwenkbewegung an dem Krafteingangsglied und dem Kraftübertragungsglied abstützen. Das Krafteingangsglied kann einen Wulst, einen Vorsprung, eine Stufe oder eine Ausnehmung aufweisen, an der sich das wenigstens eine Positionierelement abstützen kann. Das Kraftübertragungsglied kann eine Stufe oder einen Vorsprung aufweisen, an der sich das wenigstens eine Positionierelement abstützen kann. Die Stufe kann in einer Ausnehmung in dem Kraftübertragungsglied ausgebildet sein. Die Stufe kann die Ausnehmung in einen Abschnitt mit kleinerem Durchmesser und einen Abschnitt mit größerem Durchmesser unterteilen. Das wenigstens eine Positionierelement kann sich zumindest abschnittsweise in dem Abschnitt mit größerem Durchmesser erstrecken.

Das wenigstens eine Positionierelement kann zusammen mit dem Krafteingangsglied und/oder dem Kraftübertragungsglied verlagert werden. Das wenigstens eine Positionierelement, das Kraftübertragungsglied und das Krafteingangsglied können entlang der Längsachse des Hauptbremszylinders verlagert werden. Das wenigstens eine Positionierelement, das Kraftübertragungsglied und das Krafteingangsglied können zusammen als eine Einheit verlagert werden. Die Längsachse des Hauptbremszylinders kann die Betätigungsrichtung der Betätigungsvorrichtung definieren.

Das Positionierelement kann aus einem Vollmaterial, einem offenporigen Material oder einem geschlossenporigen Material, jeweils mit elastischen Eigenschaften, bestehen. Mögliche Materialen für das Positionierelement umfassen Schaumstoffe oder Elastomere.

Das Krafteingangsglied kann sich durch das wenigstens eine Positionierelement erstrecken. Das wenigstens eine Positionierelement kann in Form einer Buchse ausgebildet sein. Das Positionierelement kann aus einem zumindest im Wesentlichen fluiddichten oder einem offenporigen Material hergestellt sein. Das wenigstens eine Positionierelement kann in einem Bereich des Kraftübertragungsglieds aufgenommen sein. Das Positionierelement kann in diesem Fall nicht zum Ansaugen von beispielsweise Luft für einen Unterdruckbremskraftverstärker dienen und insbesondere nicht dafür geeignet sein.

Das wenigstens eine Positionierelement kann wenigstens eine Feder aufweisen. Die wenigstens eine Feder kann sich um das Krafteingangsglied abschnittsweise herumerstrecken. Die Feder kann sich mit einem Ende an dem Kraftübertragungsglied und mit ihrem anderen Ende an dem Krafteingangsglied abstützen. Die Feder kann konusförmig ausgebildet sein. Die Feder kann somit einen sich verringernden oder sich vergrößernden Durchmesser aufweisen. Die Feder kann eine Blatt- oder Schraubenfeder sein.

Die Betätigungsvorrichtung kann wenigstens ein Zwischenelement aufweisen. Das wenigstens eine Zwischenelement kann mit dem wenigstens einen Kraftübertragungselement (z. B. starr) verbunden sein. Das wenigstens eine Positionierelement kann sich an dem Zwischenelement und dem Krafteingangsglied abstützen. Das Zwischenelement kann mit dem Kraftübertragungsglied über eine Gewindeverbindung verbunden sein.

Das Kraftübertragungsglied kann wenigstens eine Ausnehmung aufweisen, in der das wenigstens eine Positionierelement zumindest abschnittweise angeordnet ist. Die Ausnehmung des Kraftübertragungsglieds kann einen Boden aufweisen, an dem sich das Krafteingangsglied mittelbar oder unmittelbar in axialer Richtung abstützen kann. Das Kraftübertragungsglied kann ein Vollkörper sein, der von der Ausnehmung nicht durchdrungen wird. Die Ausnehmung des Kraftübertragungsglieds kann ein Innengewinde aufweisen. Das Zwischenelement kann einen rohrförmigen Abschnitt mit einem Außengewinde aufweisen, der mit dem Innengewinde in der Ausnehmung des Kraftübertragungsglieds verschraubt werden kann.

Das wenigstens eine Positionierelement kann zumindest abschnittsweise in dem Zwischenelement aufgenommen sein. Das Zwischenelement kann eine Stufe aufweisen, an der sich das Positionierelement abstützen kann. Die Stufe kann in einer Öffnung in dem Zwischenelement ausgebildet sein. Die Stufe kann die Öffnung des Zwischenelements in einen Abschnitt mit kleinerem Durchmesser und einen Abschnitt mit größerem Durchmesser unterteilen. Das wenigstens eine Positionierelement kann sich zumindest abschnittsweise in dem Abschnitt der Öffnung mit größerem Durchmesser erstrecken oder in diesem Abschnitt aufgenommen sein. Die beiden Abschnitte der Öffnung können zylindrisch ausgebildet sein. Die Öffnung kann einen konischen Abschnitt aufweisen. Der konische Abschnitt kann einen Endabschnitt der Öffnung bilden, in dem sich der Durchmesser der Öffnung weiter aufweitet. Dieser konische Endabschnitt kann in dem Abschnitt der Öffnung mit größerem Durchmesser vorgesehen sein.

Das Kraftübertragungsglied und das Krafteingangsglied können über ein Gelenk gekoppelt sein. Das Gelenk kann einen Schwenkpunkt definieren, um den das Krafteingangsglied auslenkbar ist. Das Krafteingangsglied kann unter elastischer Deformation des Positionierelements um den Schwenkpunkt ausgelenkt werden. Die Auslenkbarkeit aus der Montagestellung kann ca. 2 bis 5°, insbesondere ca. 3°, betragen.

Das Krafteingangsglied kann einen sphärischen Endabschnitt aufweisen. Ferner kann das Kraftübertragungsglied eine Kopplungseinrichtung zum Koppeln des Krafteingangsglieds mit einem Bremspedal aufweisen. Die Kopplungseinrichtung kann an dem dem sphärischen Endabschnitt entgegengesetzten Ende des Krafteingangsglieds angeordnet sein. Das wenigstens eine Positionierelement kann in Richtung der Längsachse des Krafteingangsglieds näher an dem sphärischen Endabschnitt als an der Kopplungseinrichtung angeordnet sein. Das Kraftübertragungsglied kann eine Ausnehmung aufweisen, in der der sphärische Endabschnitt des Krafteingangsglieds aufgenommen sein kann. Die Ausnehmung des Kraftübertragungsglieds und der sphärische Endabschnitt des Krafteingangsglieds können das Gelenk bilden, das den Schwenkpunkt definiert. Die Ausnehmung des Kraftübertragungsglieds kann eine Aufnahmebuchse aufweisen, in der der sphärische Endabschnitt des Krafteingangsglieds aufgenommen sein kann. Die Aufnahmebuchse kann sich entlang des Bodens der Aufnahme erstrecken. Die Außenfläche des sphärischen Abschnitts liegt zumindest abschnittsweise an der Aufnahmebuchse zur Bildung des Gelenks an. Eine Stirnseite der Aufnahmebuchse kann sich an eine Stirnseite des Zwischenelements anlegen.

Die Betätigungsvorrichtung kann wenigstens ein Gehäuse aufweisen. In dem Gehäuse kann das Kraftübertragungsglied entlang der Längsachse des Hauptbremszylinders verlagerbar geführt sein. Das Kraftübertragungsglied kann sich in einer Variante zusammen mit dem Krafteingangsglied und dem wenigstens einem Positionierelement relativ zu dem Gehäuse bewegen. Das Kraftübertragungsglied kann ein Kolben oder ein starr mit dem Kolben verbundenes Element sein. Der Kolben kann Teil des Hauptbremszylinders sein und eine Druckkammer des Hauptbremszylinders mit Druck beaufschlagen. Die Druckkammer kann einen Pedalkraftsimulator mit Druck beaufschlagen. Dies ist beispielsweise bei Brake-by-wire-Fahrzeugbremsanlagen der Fall. Bei einer hydraulischen Fahrzeugbremsanlage können ein oder mehrere Hydraulikkreisläufe an die Druckkammer angeschlossen sein, so dass über die Druckkammer die an die Hydraulikkreisläufe angeschlossenen Radbremsen mit Hydraulikdruck beaufschlagt werden. Die Betätigungsvorrichtung kann ein Abdeckungselement aufweisen, das mit dem oder einem Gehäuse verbunden ist. Das Abdeckungselement kann das Krafteingangsglied sowie das Kraftübertragungsglied abschnittsweise umgeben.

Ferner ist ein System mit einer Betätigungsvorrichtung der voranstehend beschriebenen Art mit einem elektromechanischen Bremskraftverstärker oder einem hydraulischen Bremskraftverstärker anzugeben. Das Positionierelement kann in einer Variante keine Funktion in Bezug auf den Bremskraftverstärker aufweisen. Das System umfasst gemäß einer Implementierung keinen Unterdruckbremskraftverstärker und ist gemäß einer anderen Implementierung nicht in einem Ansaugpfad eines Unterdruckbremskraftverstärkers vorgesehen, d.h. es muss beispielsweise keine Luft für einen Unterdruckbremskraftverstärker durch das Positionierelement hindurch eingelassen oder angesaugt werden. Insbesondere ist das Positionierelement in dieser Variante nicht als Filterelement für anzusaugende Luft ausgebildet.

Der elektromechanische Bremskraftverstärker kann eine Betätigungseinheit umfassen, die mit dem Hauptbremszylinder koppelbar ist. Die Betätigungseinheit kann wenigstens ein Betätigungselement aufweisen, das über ein Getriebe mit einem Elektromotor koppelbar ist.

Ferner kann der elektromechanische Bremskraftverstärker wenigstens ein Gehäuse umfassen, in dem die Betätigungseinheit und die Betätigungsvorrichtung zumindest abschnittsweise aufgenommen sein können. Die wenigstens eine Betätigungseinheit kann ein Kraftübertragungselement aufweisen, das mit dem wenigstens einen Betätigungselement kraftübertragend koppelbar ist. Das wenigstens eine Kraftübertragungselement kann das wenigstens eine Kraftübertragungsglied aufnehmen. Das Kraftübertragungselement kann in Richtung der Längsachse des Bremskraftverstärkers verschieblich sein. Das wenigstens eine Kraftübertragungselement kann eine Aufnahme für einen gummielastische Reaktionsscheibe aufweisen. Die gummielastische Reaktionsscheibe kann an einer Anlagefläche des Kraftübertragungselements anliegen.

Das Kraftübertragungsglied kann in Form eines Kolbens ausgeführt und relativ zu dem Kraftübertragungselement verschieblich in dem Kraftübertragungselement aufgenommen sein. Das Kraftübertragungsglied kann sich über eine Feder an dem Kraftübertragungsglied abstützen. Das wenigstens eine Kraftübertragungselement kann wenigstens einen Anlagevorsprung aufweisen. Das wenigstens eine Betätigungselement kann mit dem wenigstens einen Anlagevorsprung in Anlage gebracht werden. Anders ausgedrückt kann das wenigstens eine Betätigungselement an dem Anlagevorsprung des Kraftübertragungselements anliegen, um über diese Anlage die von dem Elektromotor und dem Getriebe bereitgestellte Verstärkungskraft auf das Kraftübertragungselement übertragen zu können.

Das wenigstens eine Betätigungselement kann wenigstens eine Zahnstangenabschnitt aufweisen, der über ein Getriebe mit dem Elektromotor koppelbar ist. Das Getriebe kann ein Stirnradgetriebe sein, das von einem Elektromotor angetrieben wird und mit dem wenigstens einen Zahnstangenabschnitt gekoppelt ist. Durch den Zahnstangenabschnitt kann die von dem Elektromotor ausgegebene Drehbewegung in eine translatorische Bewegung des wenigstens einen Betätigungselements umgewandelt werden. Das wenigstens eine Betätigungselement kann zwei oder mehr Zahnstangenabschnitte aufweisen, die jeweils mit einem Zahnrad oder einem Stirnrad des Getriebes in Eingriff stehen können.

Es ist ferner eine Fahrzeugbremsanlage mit einer Betätigungsvorrichtung der voranstehend beschriebenen Art anzugeben.

### Kurze Beschreibung der Figuren

Weitere Vorteile, Einzelheiten und Merkmale der hier beschriebenen Lösung ergeben sich aus der nachfolgenden Beschreibung von Ausführungsbeispielen sowie aus den Figuren. Es zeigen:
- Fig. 1: eine Schnittansicht einer Betätigungsvorrichtung gemäß eines ersten Ausführungsbeispiels;
- Fig. 2: eine Seitenansicht eines Krafteingangsglieds und eines damit gekoppelten Kraftübertragungsglieds;
- Fig. 3: eine Ansicht eines im Schnitt dargestellten Kraftübertragungsglieds mit dem damit gekoppelten Krafteingangsglieds;
- Fig. 4: eine Ansicht eines vergrößerten Ausschnitts der Ansicht gemäß Fig. 3;
- Fig. 5: eine Schnittansicht einer Betätigungsvorrichtung gemäß eines zweiten Ausführungsbeispiels;
- Fig. 6: eine Seitenansicht eines Kraftübertragungsglieds und des damit gekoppelten Krafteingangsglieds;
- Fig. 7: eine Ansicht eines im Schnitt dargestellten Kraftübertragungsglieds und eines damit gekoppelten Krafteingangsglieds;
- Fig. 8: eine Ansicht eines vergrößerten Ausschnitts der Ansicht gemäß Fig. 7;
- Fig. 9: eine Schnittansicht eines Systems aus einem elektromechanischen Bremskraftverstärker und einer Betätigungsvorrichtung gemäß eines dritten Ausführungsbeispiels;
- Fig. 10: eine Ansicht eines vergrößerten Ausschnitts der Ansicht gemäß Fig. 9.

### Detaillierte Beschreibung der Erfindung

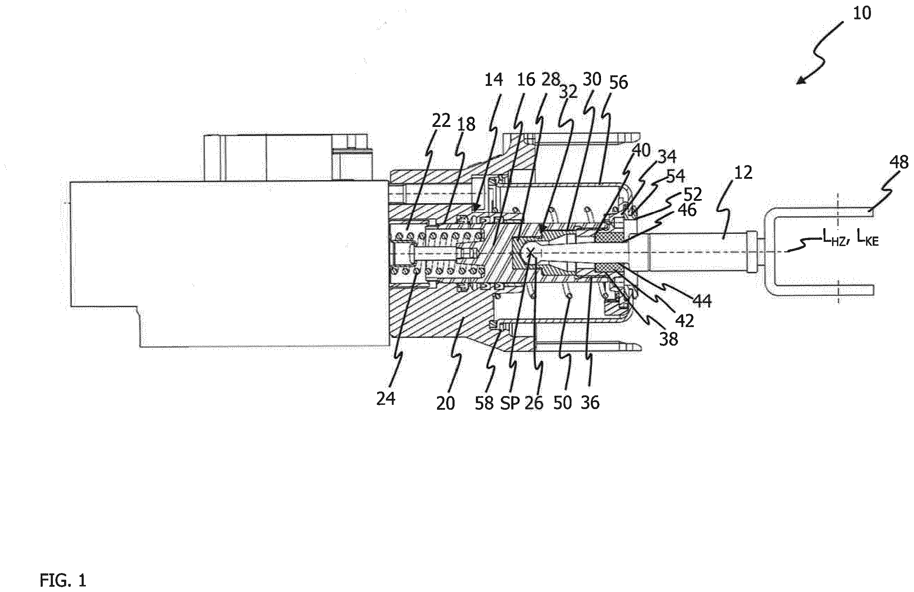

Fig. 1 zeigt eine Schnittansicht einer Betätigungsvorrichtung für eine Fahrzeugbremsanlage. Die Betätigungsvorrichtung ist allgemein mit 10 bezeichnet.

Die Betätigungsvorrichtung 10 umfasst ein Krafteingangsglied 12 und einen Hauptbremszylinder 14. Der Hauptbremszylinder 14 weist ein Kraftübertragungsglied 16 auf. Das Kraftübertragungsglied 16 ist ein Kolben des Hauptbremszylinders 14. Über das Kraftübertragungsglied 16 kann die von einem nicht gezeigten Bremspedal auf das Krafteingangsglied 12 ausgeübte Kraft auf den Hauptbremszylinder 14 übertragen werden. Das Kraftübertragungsglied 16 ist in einer Bohrung oder allgemein einer Ausnehmung 18 in einem Gehäuse aufgenommen. Das Kraftübertragungsglied 16 ist entlang einer Längsachse L_{HZ} des Hauptbremszylinders 14 relativ zu dem Gehäuse 20 verlagerbar. Die Längsachse L_{HZ} des Hauptbremszylinders 14 definiert die Betätigungsrichtung der Betätigungsvorrichtung 10. Das Kraftübertragungsglied 16 begrenzt zusammen mit der Wandung der Ausnehmung 18 eine hydraulische Druckkammer 22 in dem Gehäuse 20. Der Hauptbremszylinder 14 kann neben der Druckkammer 22 auch weitere Druckkammern aufweisen. Ein in Fig. 1 nicht gezeigter Druckausgang der Druckkammer 22 kann mit einer Pedalkraftsimulationseinrichtung verbunden sein. Dies ist der Fall, wenn die Betätigungsvorrichtung 10 in einer Brake-by-wire-Fahrzeugbremsanlage eingesetzt wird. Der Druckausgang der Drucckammer 22 kann auch mit einem oder mehreren Hydraulikkreisläufen zur Beaufschlagung der angeschlossenen Radbremsen mit Hydraulikdruck verbunden sein. Es ist kein Unterdruckbremskraftverstärker an die Betätigungsvorrichtung angeschlossen. In der Druckkammer 22 erstreckt sich eine Feder 24, die sich an dem Kraftübertragungsglied 16 abstützt und beispielsweise das Kraftübertragungsglied 16 mit einem nicht gezeigten, weiteren Druckkolben koppeln kann.

Das Krafteingangsglied 12 ist mit dem Kraftübertragungsglied 16 gelenkig gekoppelt. Das Krafteingangsglied 12 weist einen sphärisch ausgebildeten Endabschnitt 26 auf, der in einer Aufnahmebuchse 28 aufgenommen ist. Die Aufnahmebuchse 28 ist in einer Ausnehmung allgemein einer Aufnahme 30 in dem Kraftübertragungsglied 16 aufgenommen. Die Ausnehmung 30 ist gestuft mit zwei sich im Durchmesser unterscheidenden Abschnitten ausgebildet. Der sphärische Endabschnitt des Krafteingangsglieds 12 ist in dem Abschnitt der Ausnehmung 30 mit kleinerem Durchmesser aufgenommen. Die Aufnahmebuchse 28 erstreckt sich von dem Abschnitt mit kleinerem Durchmesser in den Abschnitt mit größerem Durchmesser. Die Aufnahmebuchse 28 erstreckt sich auch entlang des Bodens der Ausnehmung 30. Der sphärische Endabschnitt 26 des Krafteingangsglieds 12 liegt mit seiner Außenfläche an der Aufnahmebuchse 28 an. Der sphärische Endabschnitt 26 des Krafteingangsglieds 12 bildet zusammen mit der in dem Kraftübertragungsglied 16 angeordneten Aufnahmebuchse 28 ein Gelenk 32. Durch das Gelenk 32 kann das Krafteingangsglied 12 relativ zu dem Kraftübertragungsglied 16 verschwenkt werden. Das Gelenk 32 definiert einen Schwenkpunkt SP, um den das Krafteingangsglied 12 verschwenkt und damit ausgelenkt werden kann.

An dem Kraftübertragungsglied 16 ist ein Zwischenelement 34 vorgesehen. Das Zwischenelement 34 legt sich mit einer seiner Stirnseiten an die Aufnahmebuchse 28 an. Das Zwischenelement 34 ist mit dem Kraftübertragungsglied 16 über eine Gewindeverbindung 36 verbunden. In der Ausnehmung 30 des Kraftübertragungsglieds 16 ist ein Innengewinde ausgebildet, das zusammen mit einem Außengewinde an dem Zwischenelement 34 die Gewindeverbindung 36 bildet. Das Zwischenelement 34 weist einen rohrförmigen Abschnitt auf, der mit dem Außengewinde versehen und der in der Ausnehmung 30 in dem Kraftübertragungsglied 16 aufgenommen ist. Das Krafteingangsglied 12 erstreckt sich durch eine Öffnung 38 in dem Zwischenelement 34. Die Öffnung 38 des Zwischenelements 34 weist eine Stufe 40 auf, die die Öffnung 38 in einen Abschnitt mit kleinerem Durchmesser und einen Abschnitt mit größerem Durchmesser unterteilt.

An dem Zwischenelement 34 ist ein elastisch deformierbares Positionierelement 42 angeordnet. Das Positionierelement 42 erstreckt sich in der Öffnung 38. Das Positionierelement 42 stützt sich in axialer Richtung an der Stufe 40 der Öffnung 38 ab. Das Positionierelement 42 ist in dem Abschnitt der Öffnung 38 mit größerem Durchmesser aufgenommen. Das Positionierelement 42 ist in Form einer Rohrbuchse ausgebildet und weist eine Öffnung 44 auf, durch die sich das Krafteingangsglied 12 erstreckt. Die Innenumfangsfläche der Öffnung 44 liegt an einem Abschnitt der Außenumfangsfläche 46 des Kraftübertragungsglieds 12 an. Das Positionierelement 42 kann zusammen mit dem Krafteingangsglied 12, dem Kraftübertragungsglied 16 und dem Zwischenelement 34 entlang der Längsachse L_{HZ} des Hauptbremszylinders 14 relativ zu dem Gehäuse 20 verlagert werden. Über das Gehäuse 20 kann die Betätigungsvorrichtung am Fahrzeug (nicht gezeigt) angebracht werden.

In Fig. 1 ist die Montagestellung des Krafteingangsglieds 12 gezeigt. Das Positionierelement 42 ist elastisch deformierbar ausgebildet und stellt eine Haltekraft in Gestalt einer Federkraft bereit, mit der das Krafteingangsglied 12 in seiner Montagestellung gehalten wird. Bei Überschreiten der Haltekraft kommt es zu einer elastischen Deformation des Positionierelements 42 entgegen dieser Federkraft. Die Federkraft kann eine beliebige (z. B. lineare) Kennlinie aufweisen.

In der Montagestellung des Krafteingangsglieds 12 stimmt die Längsachse L_{KE} des Krafteingangsglieds 12 mit der Längsachse L_{HZ} des Hauptbremszylinders 14 überein, d.h. die Längsachsen L_{HZ}, L_{KE} des Krafteingangsglieds 12 und des Hauptbremszylinders 14 liegen aufeinander. Die Längsachse L_{HZ} des Hauptbremszylinders 14 definiert die Betätigungsrichtung, in der das Krafteingangsglied 12 und das Kraftübertragungsglied 16 zur Betätigung des Hauptbremszylinders 14 verlagerbar sind. Nach Überschreiten der Haltekraft kann das Krafteingangsglied 12 um den Schwenkpunkt SP verschwenkt werden, der von dem Gelenk 32 definiert wird.

Das Krafteingangsglied 12 weist eine Kopplungseinrichtung 48 auf, mit der das Krafteingangsglied 12 mit einem nicht gezeigten Bremspedal gekoppelt werden kann. Die Koppelungseinrichtung 48 ist gabelförmig ausgebildet. Die Kopplungseinrichtung 48 ist an dem zu dem sphärischen Endabschnitt 26 entgegengesetzten Ende des Krafteingangsglieds 12 vorgesehen. Das Positionierelement 42 ist in Richtung der Längsachse L_{HZ} des Hauptbremszylinders 14 und in Richtung der Längsachse L_{KE} des Krafteingangsglieds 12 näher an den sphärischen Endabschnitt 26 als an der Kopplungseinrichtung 48 angeordnet.

Zwischen dem Gehäuse 20 und dem Zwischenelement 34 erstreckt sich eine Feder 50. Die Feder 50 spannt das Krafteingangsglied 12 und das Kraftübertragungsglied 16 mit dem Zwischenelement 34 in die unbetätigte Stellung der Betätigungsvorrichtung 10 vor. Das Zwischenelement 34 wird von der Feder 50 gegen ein Anlageelement 52 gedrückt. Das Anlageelement 52 erstreckt sich entlang einer Öffnung 54 eines Abdeckungselements 56. Das Abdeckungselement 56 umgibt das Kraftübertragungsglied 16 und das Zwischenelement 34, so dass sich das Zwischenelement 34 an dem Abdeckungselement 56 über das Anlageelement 52 abstützen kann. Das Positionierelement 42 ist in Richtung der Längsachse L_{HZ} des Hauptbremszylinders 14 innerhalb des Abdeckungselements 56 angeordnet. Das Abdeckungselement 56 ist über einen Sicherungsring 58 an dem Gehäuse 20 befestigt.

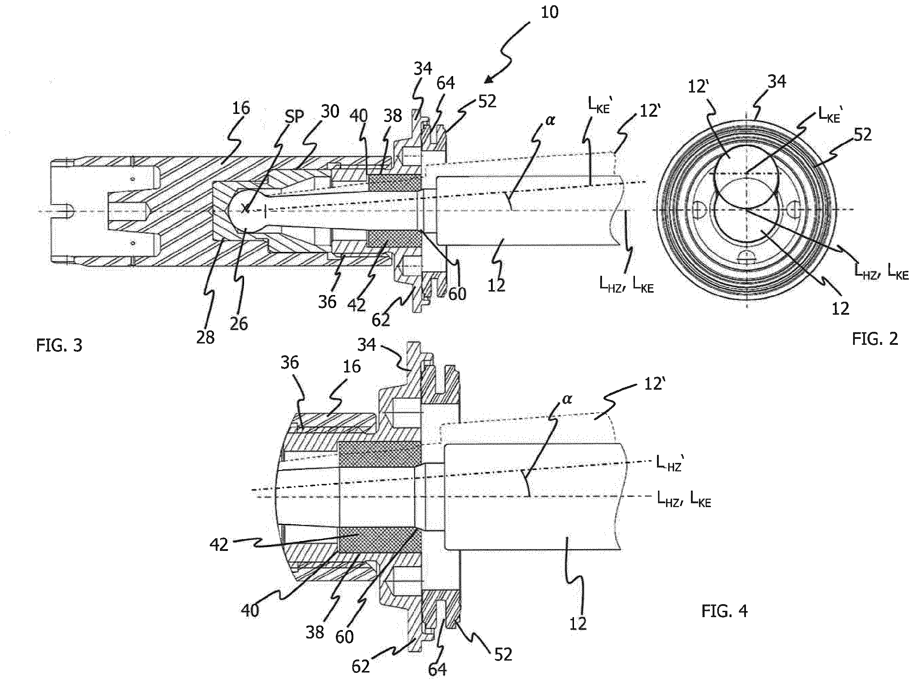

Fig. 2 zeigt eine Seitenansicht des Krafteingangsglieds 12, des Zwischenelements 34 und des Anlageelements 52. In Fig. 2 ist das Krafteingangsglied 12, 12' in der Montagestellung und in der ausgelenkten Stellung dargestellt. In der Montagestellung des Krafteingangsglieds 12 fallen die Längsachsen L_{HZ} des Hauptbremszylinders 14 und die Längsachse L_{KE} des Krafteingangsglieds 12 zusammen. Im Gegensatz dazu fallen die Längsachsen L_{KE}' des Krafteingangsglieds 12' und L_{HZ} des Hauptbremszylinders 14 in der ausgelenkten Stellung des Krafteingangsglieds 12' nicht zusammen. In der ausgelenkten Stellung verläuft die Längsachse L_{KE}' des Krafteingangsglieds 12 schräg zur Längsachse L_{HZ} des Hauptbremszylinders 14.

Fig. 3 zeigt eine Ansicht, in der das Kraftübertragungsglied 16 mit dem Zwischenelement 34, dem Anlageelement 52 und dem Positionierelement 42 im Schnitt dargestellt ist. Das Kraftübertragungsglied 12, 12' ist als Vollkörper dargestellt. Das Kraftübertragungsglied 12, 12' ist in Figur 3 in der Montagestellung und der ausgelenkten Stellung dargestellt. Das mit durchgezogenen Linien dargestellte Kraftübertragungsglied 12 zeigt die Montagestellung, in der die Längsachsen L_{HZ} des Hauptbremszylinders 14 und die Längsachse L_{KE} des Krafteingangsglieds 12 zusammenfallen. Mit strichlinierten Linien ist das Krafteingangsglied 12' in der ausgelenkten Stellung dargestellt. In dieser Stellung schneiden sich die Längsachse L_{KE}' des Krafteingangsglieds 12' und die Längsachse L_{HZ} des Hauptbremszylinders 14 im Schwenkpunkt SP. Mit der von dem Positionierelement 42 bereitgestellten Haltekraft kann das Krafteingangsglied 12 in der Montagestellung gehalten werden. Um das Krafteingangsglied 12 in die mit Strichlinien dargestellte Stellung auslenken zu können, muss die von dem Positionierelement 42 bereitgestellte Haltekraft überschritten werden. Die Auslenkung des Krafteingangsglieds 12 findet unter einer elastischen Deformation des Positionierelements 42 statt. Das Krafteingangsglied 12 kann um einen Winkel α um den Schwenkpunkt SP in die ausgelenkte Stellung (Krafteingangsglied 12') ausgelenkt werden. Der Winkel α kann beispielsweise 3° betragen. Der Winkel α wird zwischen der Längsachse L_{HZ} des Hauptbremszylinders 14 und der die Längsachse L_{KE}' des Krafteingangsglieds 12' in der ausgelenkten Stellung abgetragen.

Das Positionierelement 42 stützt sich an dem Absatz 40 der Öffnung 38 des Zwischenelements 34 und einem konischen Abschnitt 60 an dem Krafteingangsglied 12 ab. Das Zwischenelement 34 weist einen scheibenförmigen Abschnitt 62 auf, mit dem sich das Zwischenelement 34 in der Ausgangsstellung (siehe Fig. 1) an das Anlageelement 52 anlegt. Das Anlageelement 52 weist einen Schlitz 64 auf, in dem ein Randbereich der Öffnung 54 des Abdeckungselements 56 aufgenommen werden kann.

Fig. 4 zeigt einen vergrößerten Ausschnitt der Ansicht gemäß Fig. 3. In Fig. 4 ist das Krafteingangsglied 12 mit durchgezogenen Linien in der Montagestellung und das Kraftübertragungsglied 12' mit strichpunktierten Linien in der ausgelenkten Stellung dargestellt. Das Krafteingangsglied 12 kann um den Winkel α aus der Montagestellung unter einer elastischen Deformation des Positionierelements 42 ausgelenkt werden, wenn die Haltekraft im Umfang der die von Positionierelement 42 bereitgestellten Federkraft überschritten worden ist.

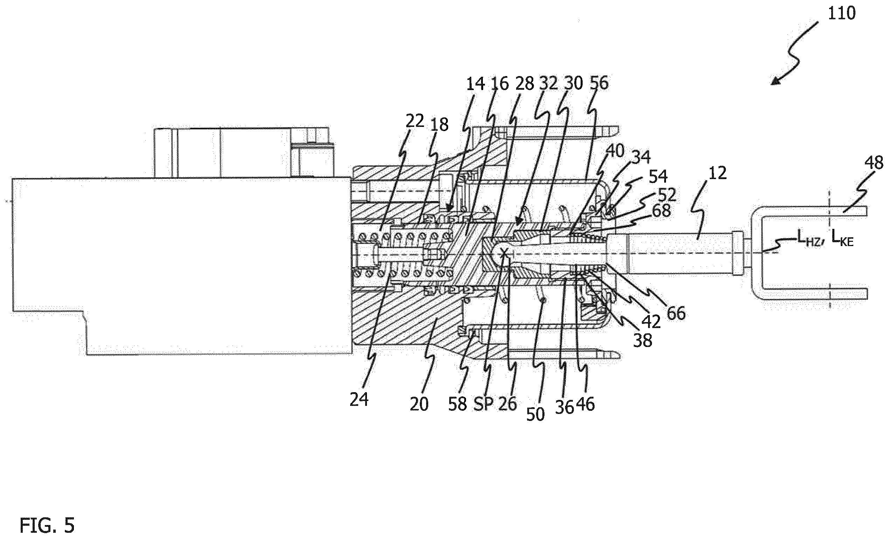

Figur 5 zeigt ein zweites Ausführungsbeispiel der Betätigungsvorrichtung 110 für eine Fahrzeugbremsanlage. Das Positionierelement 42 ist in Form einer Feder ausgebildet, die abschnittsweise das Krafteingangsglied 12 umgibt. Das Krafteingangsglied 12 weist eine Stufe beispielsweise in Gestalt eines Absatzes 66 auf, an dem sich die Feder 42 mit einem ihrer Enden axial abstützt. Mit ihrem anderen Ende stützt sich die Feder 42 an der Stufe 40 des Zwischenelements 34 ab. Die Feder 42 weist eine konische Form auf. Der Durchmesser der Feder 42 verringert sich ausgehend von ihrem an der Stufe 40 anliegenden Abschnitt in Richtung des Absatzes 66 an dem Krafteingangsglied 12. Der axiale Endabschnitt 68 der Öffnung 38 des Zwischenelements 34 weitet sich konisch auf, d.h. der Durchmesser der Öffnung 38 vergrößert sich im Abschnitt 68 kontinuierlich. Durch den konischen Abschnitt 68 kann das Krafteingangsglied 12 unter einer elastischen Deformation der Feder 42 ausgelenkt werden. Gelangt die Feder 42 in Anlage mit dem konischen Abschnitt 68 wird die Auslenkung des Krafteingangslieds 12 begrenzt.

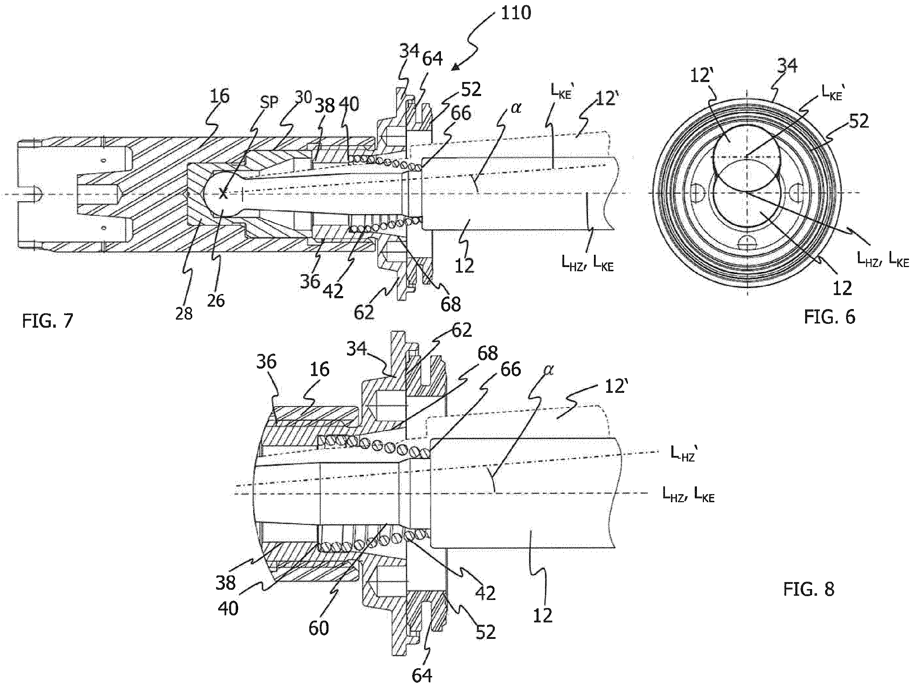

Fig. 6 zeigt eine Seitenansicht des Krafteingangsglieds 12, des Zwischenelements 34 und des Anlageelements 52, in der das Krafteingangsglied 12, 12' in der Montagestellung und in der ausgelenkten Stellung dargestellt ist. Fig. 7 zeigt eine Ansicht, in der das Kraftübertragungsglied 16 mit dem Zwischenelement 34, dem Anlageelement 52 und dem Positionierelement 42 im Schnitt und das Kraftübertragungsglied 12, 12' als Vollkörper dargestellt ist. Das mit durchgezogenen Linien dargestellte Kraftübertragungsglied 12 entspricht der Montagestellung, in der die Längsachsen L_{HZ} des Hauptbremszylinders 14 und die Längsachse L_{KE} des Krafteingangsglieds 12 zusammenfallen. Mit strichlinierten Linien ist das Krafteingangsglied 12' in der ausgelenkten Stellung dargestellt, in der sich die Längsachse L_{KE}' des Krafteingangsglieds 12 und die Längsachse L_{HZ} des Hauptbremszylinders 14 im Schwenkpunkt SP schneiden. Das mit Strichlinien dargestellte Krafteingangsglied 12' wurde um Winkel α aus der Montagestellung um den Schwenkpunkt SP in die ausgelenkte Stellung ausgelenkt.

Die Öffnung 38 des Zwischenelements 34 weist einen konischen Endabschnitt 68 auf. Der konische Endabschnitt 68 ist in dem Abschnitt der Öffnung 38 mit größerem Durchmesser ausgebildet. In diesem Abschnitt erstreckt sich die Öffnung 38 ausgehend von der Stufe 40 zunächst zylindrisch, bevor sie in den konischen Abschnitt 38 übergeht. In dem konischen Abschnitt 68 weitet sich der Durchmesser der Öffnung kontinuierlich bis zum axialen Ende des Zwischenelements 34 auf.

Fig. 8 zeigt einen vergrößerten Ausschnitt der Ansicht gemäß Fig. 7.

Die von der Feder 42 bereitgestellte Haltekraft kann das Krafteingangsglied 12 in der mit durchgezogenen Linien dargestellten Montagestellung halten. Um das Krafteingangsglied 12 in die mit Strichlinien dargestellte Stellung auszulenken, wird die Feder 42 nach Überschreiten der Haltekraft elastisch deformiert. Das Krafteingangsglied 12 kann unter einer elastischen Deformation der Feder 12 um einen Winkel α um den Schwenkpunkt SP in die ausgelenkte Stellung (Krafteingangsglied 12') ausgelenkt werden.

Die Feder 42 erstreckt sich von der Stufe 40 des Zwischenelements 34 in Richtung des Absatzes 68 an dem Krafteingangsglied 12. Die Stufe 40 und der Absatz 68 sind in axialer Richtung um die axiale Erstreckung der Feder 42 zueinander versetzt. Die Feder 42 stützt sich somit an der Stufe 40 und dem Absatz 68 ab, um das Krafteingangsglied 12 in der Montagestellung zu halten.

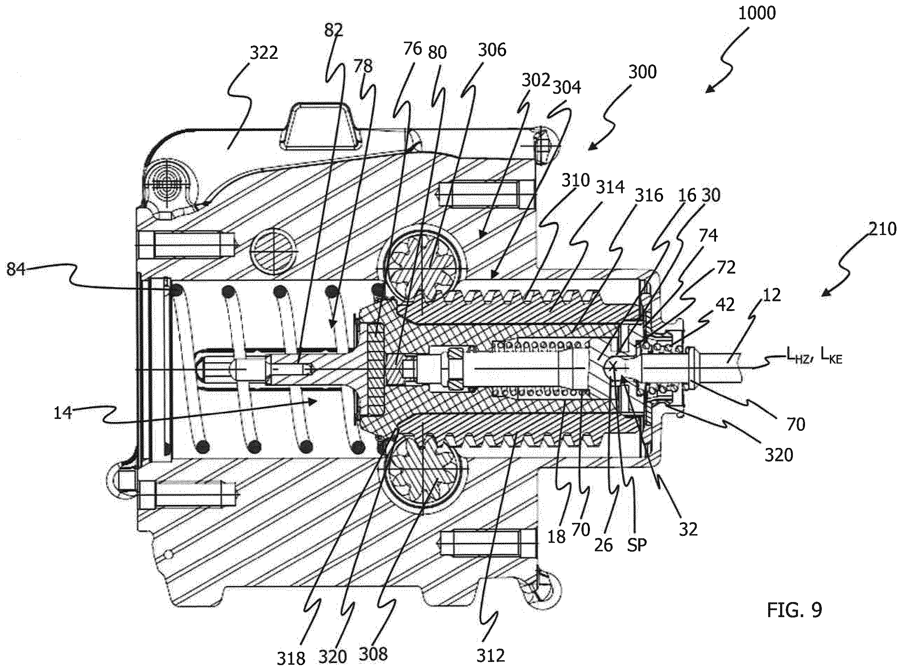

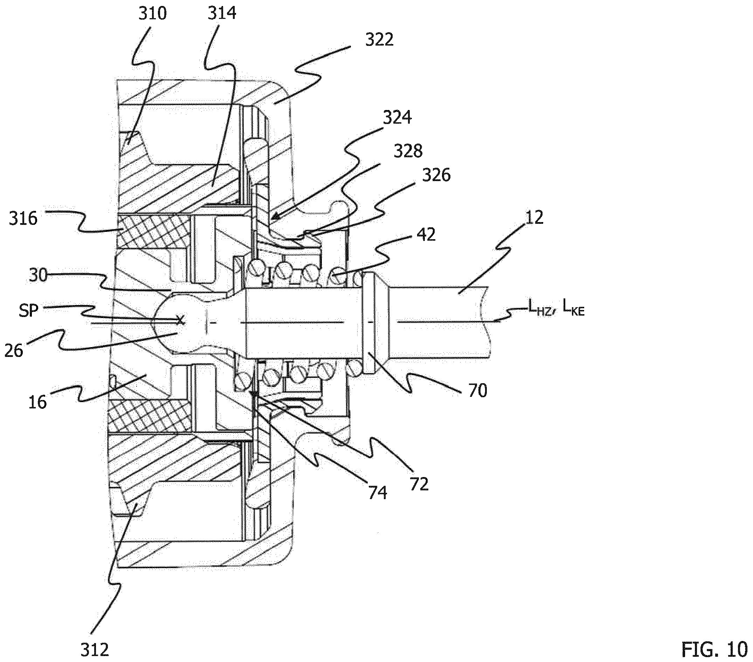

Figur 9 zeigt ein System 1000 aus einem elektromechanischen Bremskraftverstärker 300 und der Betätigungsvorrichtung 210 gemäß eines dritten Ausführungsbeispiels. Fig. 10 zeigt einen vergrößerten Ausschnitt der Ansicht gemäß Fig. 9.

Der Bremskraftverstärker 300 umfasst einen nicht gezeigten Elektromotor, ein Getriebe 302 und eine Betätigungseinheit 304. Das Getriebe 302 umfasst Stirnräder 306 und 308 sowie weitere nicht gezeigte Getriebekomponenten. Die Stirnräder 306 und 308 sind mit der Betätigungseinheit 304 des Bremskraftverstärkers 300 gekoppelt. Die Stirnräder 306 und 308 stehen mit Zahnstangenabschnitten 310 und 312 eines Betätigungselements 314 der Betätigungseinheit 304 in Eingriff.

Das Betätigungselement 314 nimmt ein Kraftübertragungselement 316 abschnittsweise auf. In dem Kraftübertragungselement 316 ist das Kraftübertagungsglied 16 des Hauptbremszylinders 14 der Betätigungsvorrichtung 210 in Richtung der Längsachse L verlagerbar aufgenommen. Das Kraftübertragungsglied 16 stützt sich über eine Feder 70 an dem Kraftübertragungselement 316 ab. Das Kraftübertragungselement 316 weist einen Anlagevorsprung 318 auf. Das Betätigungselement 314 liegt mit seinem axialen Endabschnitt 320 an dem Anlagevorsprung 318 an. Das Betätigungselement 314 kann mit seinem axialen Endabschnitt 320 an dem Anlagevorsprung 318 des Kraftübertragungselements 316 anliegen, um über diese Anlage die von dem Elektromotor und dem Getriebe 302 bereitgestellte Verstärkungskraft auf das Kraftübertragungselement 316 übertragen zu können.

Das Kraftübertragungsglied 16 ist mit dem Krafteingangsglied 12 über das Gelenk 32 gelenkig gekoppelt. Das Krafteingangsglied 12 kann in einem am Fahrzeug (nicht gezeigt) angebrachten Zustand des Bremskraftverstärkers 100 in den Fahrgastraum hineinragen.

Das Positionierelement 42 der Betätigungseinrichtung 210 ist in Form einer Feder ausgebildet, die abschnittsweise das Krafteingangsglied 12 umgibt. Das Krafteingangsglied 12 weist einen Vorsprung 70 auf, an dem sich die Feder 42 mit einem ihrer Enden axial abstützt. Mit ihrem anderen Ende stützt sich die Feder 42 an einer Ausnehmung 72 des Kraftübertragungsglieds 16 ab. Die Ausnehmung 72 ist an einer im Wesentlichen senkrecht zu der Längsachse L_{HZ} des Hauptbremszylinders 14 verlaufenden Fläche 74 des Kraftübertragungsglieds 16 ausgebildet (siehe auch Fig. 10). Die Ausnehmung 72 erstreckt sich um die Aufnahme 30 in dem Kraftübertragungsglied 16 herum. In der Aufnahme 30 des Kraftübertragungsglieds 16 ist der sphärische Endabschnitt 26 des Krafteingangsglieds 12 zur Bildung des Gelenks 32 aufgenommen. Die Feder 42 weist eine konische Form auf. Der Durchmesser der Feder 42 verringert sich ausgehend von ihrem an dem Kraftübertragungsglied 16 anliegenden Abschnitt in Richtung des Vorsprungs 70 an dem Krafteingangsglied 12. Der Vorsprung 70 umgibt das Krafteingangsglied 12. Es ist jedoch auch denkbar mehrere, zueinander versetzte Vorsprünge vorzusehen, an denen sich die Feder 42 abstützen kann.

In den Figuren 9 und 10 ist die Montagestellung des Krafteingangsglieds 12 gezeigt. Die Feder 42 ist elastisch deformierbar ausgebildet und stellt eine Haltekraft in Gestalt einer Federkraft bereit, mit der das Krafteingangsglied 12 in seiner Montagestellung gehalten wird. Bei Überschreiten der Haltekraft kommt es zu einer elastischen Deformation der Feder 42 entgegen dieser Federkraft.

In der Montagestellung des Krafteingangsglieds 12 stimmt die Längsachse L_{KE} des Krafteingangsglieds 12 mit der Längsachse L_{HZ} des Hauptbremszylinders 14 überein, d.h. die Längsachsen L_{HZ}, L_{KE} des Krafteingangsglieds 12 und des Hauptbremszylinders 14 liegen aufeinander. Die Längsachse L_{HZ} des Hauptbremszylinders 14 definiert die Betätigungsrichtung, in der das Krafteingangsglied 12, das Kraftübertragungsglied 16, das Kraftübertragungselement 316 sowie das Betätigungselement 314 des Bremskraftverstärkers 300 zur Betätigung des Hauptbremszylinders 14 verlagerbar sind. Nach Überschreiten der Haltekraft kann das Krafteingangsglied 12 um den Schwenkpunkt SP verschwenkt werden, der von dem Gelenk 32 definiert wird.

Der Bremskraftverstärker 300 weist ein Gehäuse 322 auf, in dem zumindest die Betätigungseinheit 304 aufgenommen ist. Das Gehäuse 322 kann mit einem Gehäuse (nicht gezeigt) des Hauptbremszylinders 14 gekoppelt werden. Die Betätigungsvorrichtung 210 kann zumindest abschnittsweise in dem Gehäuse 322 aufgenommen sein. Zwischen dem Betätigungselement 314 und dem Gehäuse 322 ist ein Dämpfungselement 324 angeordnet (siehe Fig. 10). Das Dämpfungselement 324 dämpft bei einer Rückstellbewegung der Betätigungseinheit 304 den Anschlag des Betätigungselements 314 an dem Gehäuse 322. Das Dämpfungselement 324 kann mit dem Gehäuse 322 verrastet werden. Dazu können das Dämpfungselement 324 und das Gehäuse 322 korrespondierende Rastformationen aufweisen. An dem Dämpfungselement 324 kann einen nach radial außen vorstehende Rastnase 326 vorgesehen sein. An dem Gehäuse 322 kann ein radial einwärts vorstehender Vorsprung 328 ausgebildet sein, der mit der Rastnase 326 verrastet werden kann. Durch die dämpfende Wirkung des Dämpfungselements 324 können unerwünschte Vibrationen und insbesondere Geräuschentwicklungen (wie Anschlaggeräusche) unterbunden werden. Der Hauptbremszylinder 14 weist ferner eine gummielastische Reaktionsscheibe 76 auf, die mit einem Krafteinleitelement 78 verbunden ist (siehe Fig. 9). Die Reaktionsscheibe 76 ist teilweise in dem Kraftübertagungselement 316 aufgenommen. An dem Kraftübertragungsglied 16 ist ein Endelement 80 vorgesehen, das dazu ausgebildet ist, bei einer Betätigung der Betätigungsvorrichtung 210 auf die Reaktionsscheibe 76 einzuwirken. Das Krafteinleitelement 78 weist einen zapfenförmigen Abschnitt 82 auf. Dieser zapfenförmige Abschnitt 82 ist zur teilweisen Aufnahme durch einen nicht gezeigten Druckkolben des Hauptbremszylinders 14 ausgebildet. Der Hauptbremszylinder 14 kann auch mehrere Druckkolben aufweisen, die in einem nicht gezeigten Gehäuse des Hauptbremszylinders 14 mit Hydraulikflüssigkeit gefüllte Druckkammern (nicht gezeigt) festlegen. Dieses nicht gezeigte Gehäuse des Hauptbremszylinders 14 kann mit dem Gehäuse 322 des Bremskraftverstärkers 300 gekoppelt werden. Ferner ist eine Rückstellfeder 84 vorgesehen, die die Betätigungsvorrichtung 210 in ihre Ausgangsstellung vorgespannt.

Das Positionierelement 42 hält das Krafteingangsglied 12 in der Montagestellung. Dadurch kann die Montage der Betätigungseinrichtung 10, 110, 210 vereinfach werden. Die Betätigungsvorrichtung 10, 110, 210 kann mit dem Krafteingangsglied 12 in der Montagestellung an der Spritzwand des Fahrzeugs angebracht werden. In der Montagestellung kann das Krafteingangslied 12 schnell und einfach durch eine Öffnung in der Spritzwand in den Fahrzeuginnenraum eingeführt werden. Im Fahrzeuginnenraum kann das Krafteingangsglied 12 aufgrund der Montagstellung schnell und einfach mit dem Bremspedal gekoppelt werden, ohne dass das Krafteingangsglied 12 aufwändig händisch vom Monteur ausgerichtet werden muss. Nach Überschreiten der vorbestimmten Haltekraft lässt das Positionierelement 42 eine Auslenkung des Kraftübertragungsglieds 12 zu, so dass das Kraftübertragungsglied 12 im montierten Zustand beispielsweise der Schwenkbewegung des Bremspedals bei einer Betriebsbremsung folgen kann.

## Patentansprüche

1. Betätigungsvorrichtung (10; 110; 210) für eine Fahrzeugbremsanlage mit:
einem Krafteingangsglied (12), das mit einem Bremspedal koppelbar ist,
einem Hauptbremszylinder (14), wobei der Hauptbremszylinder (14) wenigstens ein Kraftübertragungsglied (16) aufweist, das mit dem Krafteingangsglied (12) gelenkig gekoppelt ist, wobei das Kraftübertragungsglied (16) zur Übertragung einer auf das Krafteingangsglied (12) ausgeübten Kraft auf den Hauptbremszylinder (14) angeordnet ist, **gekennzeichnet durch** wenigstens ein elastisch deformierbaren Positionierelement (42), wobei das wenigstens eine Positionierelement (42) eine Haltekraft bereitstellt, mit der das wenigstens eine Positionierelement (42) das wenigstens eine Krafteingangsglied (12) in einer Montagestellung bezüglich des Hauptbremszylinders (14) hält.

2. Betätigungsvorrichtung (10; 110; 210) nach Anspruch 1,
wobei eine Längsachse (L_{KE}) des Krafteingangslieds (12) in der Montagestellung des Krafteingangsglieds (12) im Wesentlichen mit einer Längsachse (L_{HZ}) des Hauptbremszylinders (14) zusammenfällt.

3. Betätigungsvorrichtung (10; 110; 210) nach Anspruch 1 oder 2,
wobei das wenigstens eine Positionierelement (42) nach Überschreiten der Haltekraft eine Auslenkung des Krafteingangsglieds (12) zulässt.

4. Betätigungsvorrichtung (10; 110; 210) nach einem der Ansprüche 1 bis 3, wobei sich das wenigstens eine Positionierelement (42) zwischen dem Krafteingangsglied (12) und dem Kraftübertragungsglied (16) erstreckt.

5. Betätigungsvorrichtung (10; 110; 210) nach einem der Ansprüche 1 bis 4, wobei das wenigstens eine Positionierelement (42) zusammen mit dem Krafteingangsglied (12) und/oder dem Kraftübertragungsglied (16) verlagerbar ist.

6. Betätigungsvorrichtung (10) nach einem der Ansprüche 1 bis 5,
wobei das wenigstens eine Positionierelement (42) in Form einer Buchse ausgebildet ist.

7. Betätigungsvorrichtung (10; 110) einem der Ansprüche 1 bis 6,
wobei die Betätigungsvorrichtung (10; 110) ein Zwischenelement (34) aufweist, das mit dem wenigstens einen Kraftübertragungsglied (16) verbunden ist, wobei sich das wenigstens eine Positionierelement (42) an dem Zwischenelement (34) und dem Krafteingangsglied (12) abstützt.

8. Betätigungsvorrichtung (10; 110) nach einem der Ansprüche 1 bis 7,
wobei das wenigstens eine Positionierelement (42) zumindest abschnittsweise in dem Zwischenelement (34) aufgenommen ist.

9. Betätigungsvorrichtung (10; 110; 210) nach einem der Ansprüche 1 bis 8,
wobei das Krafteingangsglied (12) einen sphärischen Endabschnitt und eine Kopplungseinrichtung (48) zum Koppeln des Krafteingangsglieds (12) mit einem Bremspedal aufweist, wobei die Kopplungseinrichtung (48) an dem dem sphärischen Endabschnitt (26) entgegengesetzten Ende des Krafteingangsglieds (12) angeordnet ist und wobei das wenigstens eine Positionierelement (42) in Richtung der Längsachse (L_{KE}) des Krafteingangsglieds (12) näher an dem sphärischen Endabschnitt (26) als an der Kopplungseinrichtung (48) angeordnet ist.

10. System aus einer Betätigungsvorrichtung (10; 110; 210) nach einem der Ansprüche 1 bis 9 und einem elektromechanischen Bremskraftverstärker (300) oder einem hydraulischen Bremskraftverstärker.

11. System (1000) nach Anspruch 10,
wobei der elektromechanische Bremskraftverstärker (300) eine Betätigungseinheit (304) aufweist, die mit dem Hauptbremszylinder (14) koppelbar ist, wobei die Betätigungseinheit (304) wenigstens ein über ein Getriebe (302) mit einem Elektromotor koppelbares Betätigungselement (314) aufweist.

12. System (1000) nach Anspruch 11,
wobei der elektromechanische Bremskraftverstärker (300) ein Gehäuse (318) aufweist, in dem die Betätigungsvorrichtung (10; 110; 210) und/oder die Betätigungseinheit (304) zumindest abschnittsweise aufgenommen sind.

13. System (1000) nach Anspruch 11 oder 12,
wobei die wenigstens eine Betätigungseinheit (304) ein Kraftübertragungselement (316) aufweist, das mit dem wenigstens einen Betätigungselement (314) kraftübertragend koppelbar ist, wobei das wenigstens eine Kraftübertragungselement (316) das wenigstens eine Kraftübertragungsglied (16) zumindest abschnittweise aufnimmt.

14. System (1000) nach einem der Ansprüche 11 bis 13,
wobei das wenigstens eine Betätigungselement (310) wenigstens einen Zahnstangenabschnitt (310, 312) aufweist, der über ein Getriebe (302) mit dem Elektromotor koppelbar ist.

15. Fahrzeugbremsanlage mit einem System nach einem der Ansprüche 10 bis 14 oder einer Betätigungsvorrichtung (10; 110; 210) nach einem der Ansprüche 1 bis 9.

## Claims

1. Actuating apparatus (10; 110; 210) for a vehicle brake system with:
a force input member (12) which can be coupled to a brake pedal,
a brake master cylinder (14), the brake master cylinder (14) having at least one force transmission member (16) which is coupled to the force input member (12) in an articulated manner, the force transmission member (16) being arranged for the transmission of a force which is exerted on the force input member (12) to the brake master cylinder (14), **characterized by**
at least one elastically deformable positioning element (42), the at least one positioning element (42) providing a holding force, by way of which the at least one positioning element (42) holds the at least one force input member (12) in a mounting position with regard to the brake master cylinder (14).

2. Actuating apparatus (10; 110; 210) according to Claim 1,
a longitudinal axis (L_{KE}) of the force input member (12) in the mounting position of the force input member (12) coinciding substantially with a longitudinal axis (L_{HZ}) of the brake master cylinder (14).

3. Actuating apparatus (10; 110; 210) according to Claim 1 or 2,
the at least one positioning element (42) permitting a deflection of the force input member (12) after the holding force is exceeded.

4. Actuating apparatus (10; 110; 210) according to one of Claims 1 to 3,
the at least one positioning element (42) extending between the force input member (12) and the force transmission member (16).

5. Actuating apparatus (10; 110; 210) according to one of Claims 1 to 4,
it being possible for the at least one positioning element (42) to be moved together with the force input member (12) and/or the force transmission member (16).

6. Actuating apparatus (10) according to one of Claims 1 to 5,
the at least one positioning element (42) being configured in the form of a bushing.

7. Actuating apparatus (10; 110) according to one of Claims 1 to 6,
the actuating apparatus (10; 110) having an intermediate element (34) which is connected to the at least one force transmission member (16), the at least one positioning element (42) being supported on the intermediate element (34) and the force input member (12).

8. Actuating apparatus (10; 110) according to one of Claims 1 to 7,
the at least one positioning element (42) being received at least in sections in the intermediate element (34).

9. Actuating apparatus (10; 110; 210) according to one of Claims 1 to 8,
the force input member (12) having a spherical end section and a coupling device (48) for coupling the force input member (12) to a brake pedal, the coupling device (48) being arranged at that end of the force input member (12) which is opposite the spherical end section (26), and the at least one positioning element (42) being arranged closer to the spherical end section (26) than to the coupling device (48) in the direction of the longitudinal axis (L_{KE}) of the force input member (12).

10. System consisting of an actuating apparatus (10; 110; 210) according to one of Claims 1 to 9 and an electromechanical brake booster (300) or a hydraulic brake booster.

11. System (1000) according to Claim 10,
the electromechanical brake booster (300) having an actuating unit (304) which can be coupled to the brake master cylinder (14), the actuating unit (304) having at least one actuating element (314) which can be coupled via a gear mechanism (302) to an electric motor.

12. System (1000) according to Claim 11,
the electromechanical brake booster (300) having a housing (318), in which the actuating apparatus (10; 110; 210) and/or the actuating unit (304) are/is received at least in sections.

13. System (1000) according to Claim 11 or 12,
the at least one actuating unit (304) having a force transmission element (316) which can be coupled in a force-transmitting manner to the at least one actuating element (314), the at least one force transmission element (316) receiving the at least one force transmission member (16) at least in sections.

14. System (100) according to one of Claims 11 to 13, the at least one actuating element (310) having at least one rack section (310, 312) which can be coupled via a gear mechanism (302) to the electric motor.

15. Vehicle brake system with a system according to one of Claims 10 to 14 or an actuating apparatus (10; 110; 210) according to one of Claims 1 to 9.

## Revendications

1. Dispositif d'actionnement (10 ; 110 ; 210) pour une installation de freinage de véhicule, comportant :
un organe d'entrée de force (12) qui peut être accouplé à une pédale de frein,
un maître-cylindre de frein (14), dans lequel le maître-cylindre de frein (14) comprend au moins un organe de transmission de force (16) qui est accouplé de manière articulée à l'organe d'entrée de force (12), dans lequel l'organe de transmission de force (16) est disposé pour la transmission, au maître-cylindre de frein (14), d'une force exercée sur l'organe d'entrée de force (12), **caractérisé par**
au moins un élément de positionnement (42) déformable élastiquement, l'au moins un élément de positionnement (42) produisant une force de retenue à l'aide de laquelle l'au moins un élément de positionnement (42) retient l'au moins un organe d'entrée de force (12) dans une position de montage par rapport au maître-cylindre de frein (14).

2. Dispositif d'actionnement (10 ; 110 ; 210) selon la revendication 1,
dans lequel un axe longitudinal (L_{KE}) de l'organe d'entrée de force (12) coïncide sensiblement avec un axe longitudinal (L_{HZ}) du maître-cylindre de frein (14) dans la position de montage de l'organe d'entrée de force (12).

3. Dispositif d'actionnement (10 ; 110 ; 210) selon la revendication 1 ou 2,
dans lequel l'au moins un élément de positionnement (42) autorise une déviation de l'organe d'entrée de force (12) après dépassement de la force de retenue.

4. Dispositif d'actionnement (10 ; 110 ; 210) selon l'une des revendications 1 à 3,
dans lequel l'au moins un élément de positionnement (42) s'étend entre l'organe d'entrée de force (12) et l'organe de transmission de force (16).

5. Dispositif d'actionnement (10 ; 110 ; 210) selon l'une des revendications 1 à 4, dans lequel l'au moins un élément de positionnement (42) peut être déplacé conjointement avec l'organe d'entrée de force (12) et/ou l'organe de transmission de force (16).

6. Dispositif d'actionnement (10) selon l'une des revendications 1 à 5,
dans lequel l'au moins un élément de positionnement (42) est réalisé sous la forme d'une douille.

7. Dispositif d'actionnement (10 ; 110) selon l'une des revendications 1 à 6,
le dispositif d'actionnement (10 ; 110) comprenant un élément intermédiaire (34) qui est relié à l'au moins un organe de transmission de force (16), l'au moins un élément de positionnement (42) étant supporté sur l'élément intermédiaire (34) et l'organe d'entrée de force (12).

8. Dispositif d'actionnement (10 ; 110) selon l'une des revendications 1 à 7,
dans lequel l'au moins un élément de positionnement (42) est reçu au moins partiellement dans l'élément intermédiaire (34).

9. Dispositif d'actionnement (10 ; 110 ; 210) selon l'une des revendications 1 à 8, dans lequel l'organe d'entrée de force (12) comprend une partie d'extrémité sphérique et un dispositif d'accouplement (48) pour l'accouplement de l'organe d'entrée de force (12) à une pédale de frein, dans lequel le dispositif d'accouplement (48) est disposé à l'extrémité de l'organe d'entrée de force (12) opposée à la partie d'extrémité sphérique (26), et dans lequel l'au moins un élément de positionnement (42) est disposé plus près de la partie d'extrémité sphérique (26) que du dispositif d'accouplement (48) dans la direction de l'axe longitudinal (L_{KE}) de l'organe d'entrée de force (12).

10. Système constitué d'un dispositif d'actionnement (10 ; 110 ; 210) selon l'une des revendications 1 à 9 et d'un servofrein électromécanique (300) ou d'un servofrein hydraulique.

11. Système (1000) selon la revendication 10,
dans lequel le servofrein électromécanique (300) comprend une unité d'actionnement (304) qui peut être accouplée au maître-cylindre de frein (14), dans lequel l'unité d'actionnement (304) comprend au moins un élément d'actionnement (314) pouvant être accouplé à un moteur électrique par le biais d'une transmission (302).

12. Système (1000) selon la revendication 11,
dans lequel le servofrein électromécanique (300) comprend un boîtier (318) dans lequel le dispositif d'actionnement (10 ; 110 ; 210) et/ou l'unité d'actionnement (304) sont reçus au moins partiellement.

13. Système (1000) selon la revendication 11 ou 12, dans lequel l'au moins une unité d'actionnement (304) comprend un élément de transmission de force (316) qui peut être accouplé à l'au moins un élément d'actionnement (314) de manière à transmettre une force, dans lequel l'au moins un élément de transmission de force (316) reçoit au moins partiellement l'au moins un organe de transmission de force (16).

14. Système (1000) selon l'une des revendications 11 à 13,
dans lequel l'au moins un élément d'actionnement (310) comprend au moins une partie crémaillère (310, 312) qui peut être accouplée au moteur électrique par le biais d'une transmission (302).

15. Installation de freinage de véhicule comprenant un système selon l'une des revendications 10 à 14 ou un dispositif d'actionnement (10 ; 110 ; 210) selon l'une des revendications 1 à 9.
